# EUROPEAN PATENT SPECIFICATION

(11) **EP 4 175 774 B1**
(45) Date of publication and mention of the grant of the patent: **15.10.2025**
(21) Application number: 21727003.2
(22) Date of filing: 22.04.2021
(51) Int. Cl.: B21D 5/00, B21D 43/11

(54) **PANELING MACHINE INCLUDING A WORKPIECE ROTATION CONTROL SYSTEM**
PLATTENVERARBEITUNGSMASCHINE MIT EINEM SYSTEM ZUR STEUERUNG DER WERKSTÜCKROTATION
PANENEAUTEUSE COMPRENANT UN SYSTEME DE CONTROLE DE LA ROTATION DE LA PIECE DE TRAVAIL

(30) Priority: 01.07.2020 IT 202000015850
(43) Date of publication of application: 10.05.2023
(73) Proprietor: Prima Industrie S.p.A., 10093 Collegno (TO) (IT)
(72) Inventor: CAVAZZA, Alberto, 10093 Collegno (IT); PERUFFO, Adriano, 10093 Collegno (IT)
(74) Representative: Garavelli, Paolo
(86) International application number: PCT/IT2021/050127
(87) International publication number: WO 2022/003739

(56) References cited:
- EP-A1- 0 865 331
- WO-A1-91/09696
- DE-A1- 19 641 402
- GB-A- 2 004 216
- US-A1- 2007 180 886

## Description

The present invention refers to a paneling machine including a workpiece rotation control system.

Machines for paneling pieces, typically sheet metal sheets, are known in the art, usually comprising at least one rotating device and served by at least one manipulator device with gripper on a rotating axis designed to arrange at least one workpiece of material to be processed in a predetermined position on at least one rotating element of this rotating device.

Generally, the rotating element is subject to a motorized rotation commanded by a numerical control (CN), while the gripper presses on the workpiece, for example on the sheet, usually with a force of 40000N: the gripper also includes an idle wheel and is always in contact with the workpiece.

Currently, during the rotation movement of the workpiece (usually above a brush and/or ball plane), and in particular of the sheet metal by the rotator to start the processing by the paneling machine, it may happen that there is a relative movement (rotation) between the rotator and the sheet itself, and this determines an error in the correct positioning reference of the workpiece with respect to the bending line on the rotating element of the rotator device; likewise, there may be a loss of contact between the workpiece and the rotating element of the rotating device, thus generating a relative motion which determines a slippage of the workpiece itself with respect to this rotating element (this rotation can take place after centering and before the first bend of the first side, if the centered side is not the first to be bent, and then always occurs between one side and the next).

To obviate this possible slippage, currently the workpiece is centered again with a consequent increase in the cycle time. This additional centering must be entered into the program manually by the operator in the bending program. The rotation error can occur, for example, when the workpiece is covered with a protective film, or because it is necessary to lower the holding force of the workpiece in order not to damage the surface, so there is less friction effect and during the rotation the workpiece, that is the sheet, could slip; this rotation error can also occur due to the particular inertia of the workpiece as, for example, by adopting too high angular accelerations during its movement, the friction effect of the workpiece is overcome.

At programming level, a formula is therefore used for the automatic calculation of the maximum acceleration to be set to prevent the workpiece from slipping during rotation: this formula, however, does not always work correctly and for very large and heavy pieces, i.e. high inertia, greatly limits the value of the controlled acceleration, with a consequent extra increase in the cycle time.

Consequently, very often it is the operator who, after several attempts, is forced to manually adjust the acceleration value to limit/eliminate slippage or manually add re-centering (i.e. additional centering to the first) of the workpiece in the program to avoid waste material.

The main parameters that therefore affect sliding are:
- angular acceleration value set by NC;
- type of material of the workpiece (steel, aluminum etc.);
- moment of inertia and weight of the workpiece;
- value of the force exerted by the gripper (adjustable option);
- type of gripper (standard or UBC option)
- type of surface of the rotating element (knurled, smooth, bakelite, etc.);
- coefficient of friction between workpiece and gripper;
- coefficient of friction between the workpiece and the sliding surface, usually with brushes/balls;
- surface treatment of the workpiece (protective film, prepainting, galvanizing, etc.).

Documents GB-A-2 004 216, DE-A1-196 41 402 and WO-A1-91/09696 describe control systems according to the prior art. Document EP-A1-0 865 331 discloses a control system according to the preamble of Claim 1.

Therefore, object of the present invention is solving the aforesaid prior art problems by providing a paneling machine including a workpiece rotation control system which allows automatically identifying and correcting any relative slippage of this workpiece of material to be processed with respect to the manipulator device.

Another object of the present invention is providing a paneling machine including a workpiece rotation control system which allows having no waste pieces, without increasing (or increasing it to a lesser extent) the cycle time of the required bending operation.

Furthermore, an object of the present invention is providing a paneling machine which allows automatically identifying and correcting any relative slippage of this workpiece of material to be processed with respect to the manipulator device.

The aforementioned and other objects and advantages of the invention, which will emerge from the following description, are achieved with a paneling machine including a workpiece rotation control system as described in Claim 1. Preferred embodiments and non-trivial variations of the present invention form the subject of the dependent claims.

It is understood that all attached claims form an integral part of the present description.

It will be immediately obvious that innumerable variations and modifications (for example relating to shape, dimensions, arrangements and parts with equivalent functionality) can be made to what is described without departing from the scope of the invention as appears from the attached claims.

The present invention will be better described by some preferred embodiments, provided by way of non-limiting example, with reference to the attached drawings, in which:

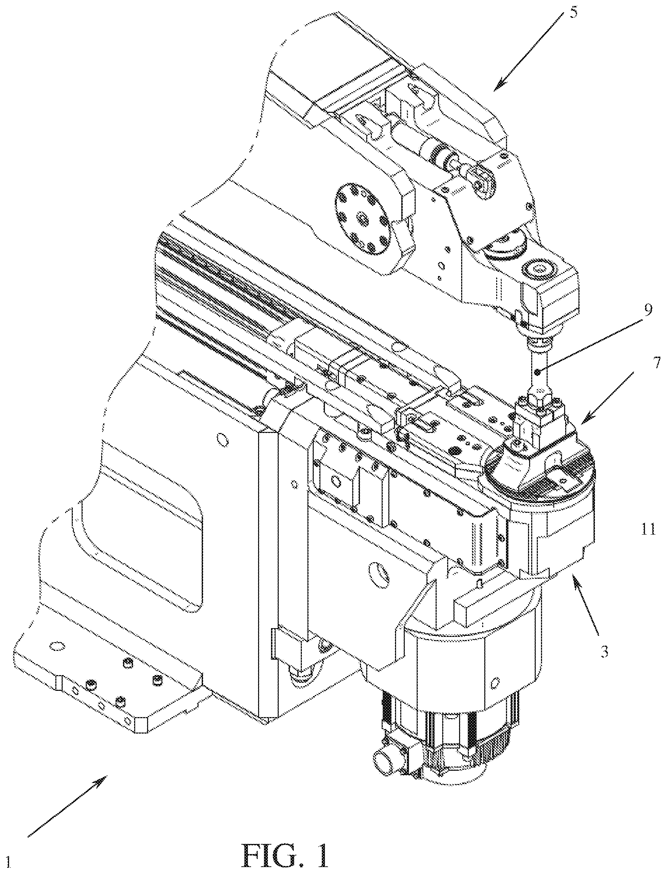

- FIG. 1 shows a perspective view of a paneling machine and of the relative manipulator device comprising a preferred embodiment of the system according to the present invention;

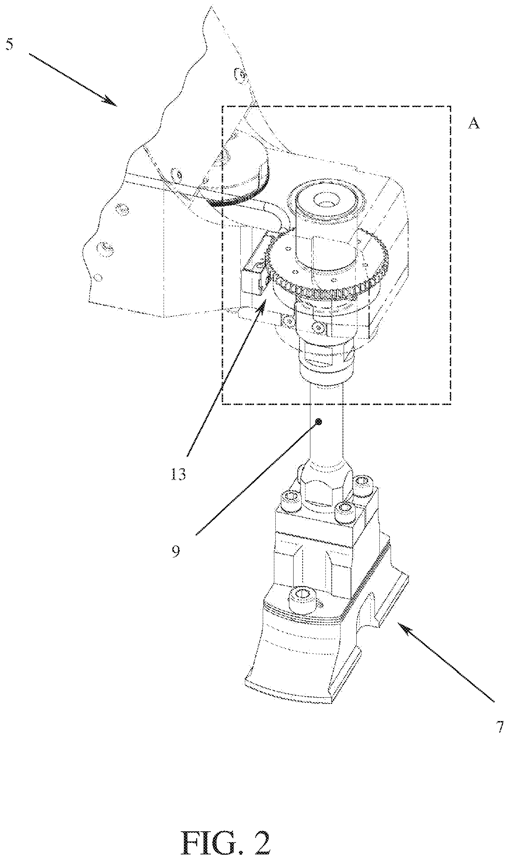

- FIG. 2 shows a transparent view of a component of the manipulator device;

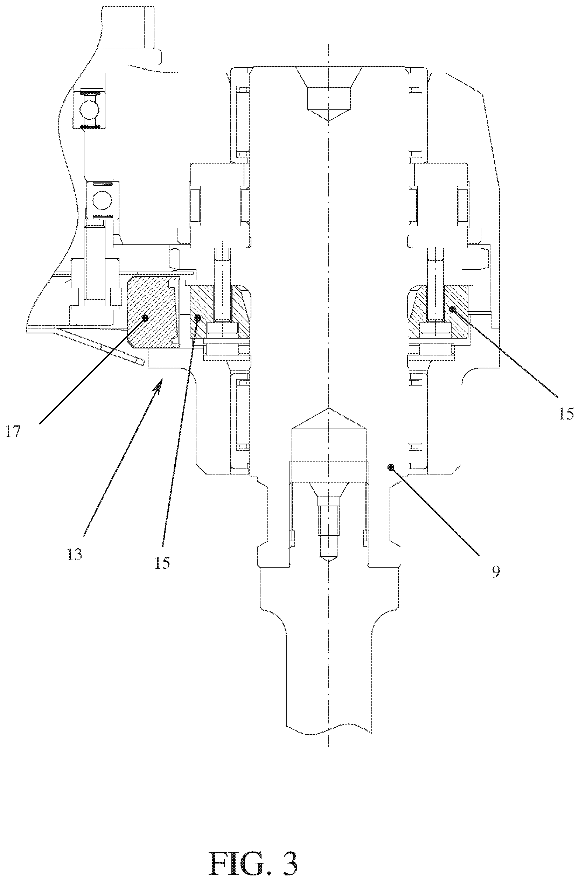

- FIG. 3 shows a side sectional view of the detail of the manipulator device enclosed in frame A of FIG. 2;
- FIG. 4 shows a perspective view of a component of the system according to the present invention; and
- FIG. 5 shows an exemplary scheme for calculating the quantification of any slippage of the workpiece of material to be processed by the paneling machine.

With reference to the Figures, it is therefore possible to note a preferred embodiment of the paneling machine 1 including a workpiece rotation control system, this paneling machine 1 comprising at least one rotator device 3 and being served by at least one manipulator device 5 with gripper 7 on a rotating axis 9 provided to arrange in a predetermined position at least one workpiece of material to be processed (not shown), typically a sheet of metal, on at least one rotating element 11 of this rotator device 3: advantageously, this manipulator device 5 with gripper 7 comprises at least one first measuring means 13 of at least one angular position of said rotary axis 9 of said gripper 7 and said rotator device 3 comprises at least one second measuring means (not shown) of at least one angular position of said rotary element 11 of said rotator device 3, such system further comprising processing means provided for relatively comparing at least a value of at least one angular position measured by said first measuring means 13 with at least one value of at least one angular position measured by said second measuring means.

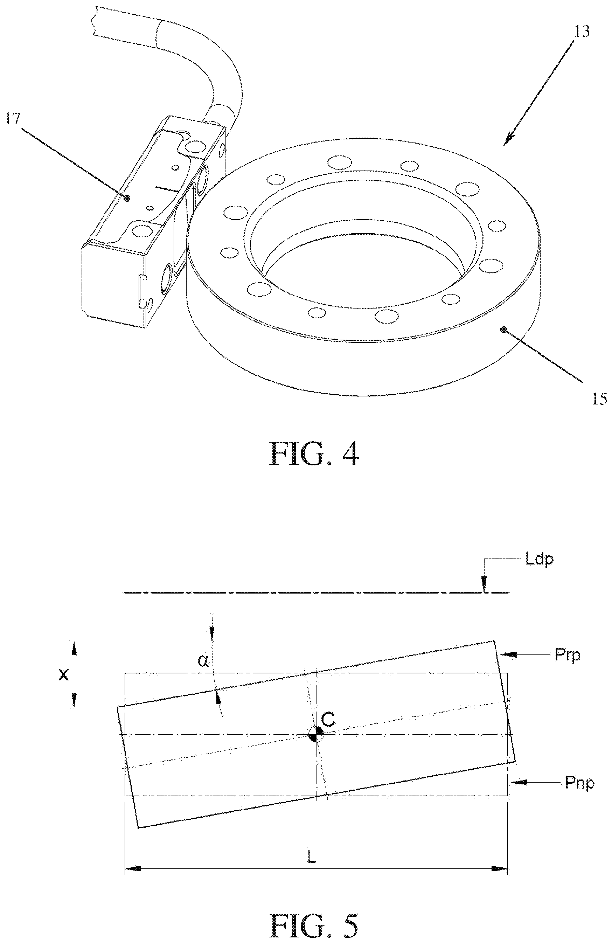

Again advantageously, said processing means operatively cooperate with said rotating element 11 of the rotator device 3 and/or said rotating axis 9 of said gripper 7 and, in the case in which the value of the angular position measured by said first measuring means differs from the value of the angular position measured by this second measuring means (i.e. a slippage of the workpiece with relative angular error with respect to its correct positioning has occurred, taking it from a position of the nominal workpiece Pnp to a position of the real workpiece Prp, as shown in particular in FIG. 5 and on which we will dwell later), these processing means command this rotating element 11 of the rotator device 3 and/or this rotating axis 9 of this gripper 7 to perform a rotation of the workpiece equal to the value of the angular difference (corresponding to the degrees and/or submultiples of the degree of slippage detected by the workpiece) between the value of the angular position measured by said first measuring means and the value of the angular position measured by said second measuring means.

In particular, the first measuring means 13 can be composed of at least one first rotary encoder device.

Similarly, the second measuring means can be composed of at least one second rotary encoder device.

Preferably, at least the first encoder device 13 is of the incremental optical type with high angular resolution: obviously, the first encoder device 13 can be of any other type suitable for the purpose, such as, for example, of the magnetic or inductive type of equal resolution, as well as of absolute type without departing from the scope of the present invention.

The first encoder device 13 can therefore comprise at least one respective graduated ring 15 integral with and coaxially arranged to said rotating axis 9 of the gripper 7 and a relative reading head 17 fixed with respect to the rotation of said rotating axis 9 and of the relative graduated ring 15.

For example, such a graduated ring can have a diameter of 52 mm with a graduation of 20 µm (corresponding to 8192 subdivision lines) and the relative reading head can be of the direct digital output type (with x20 signal interpolator).

Preferably, the second encoder device is of the absolute optical type with high angular resolution: also in this case, the second encoder device could be of any other type suitable for the purpose, such as, for example, of the magnetic or inductive type of equal resolution, without departing from the scope of the present invention.

The second encoder device can therefore comprise at least one relative graduated ring integral with and arranged coaxially with the rotating axis (not shown) of the rotating element 11 of the rotating device 3 or on a rotating axis (not shown) rigidly connected thereto by means of a transmission and a relative reading head fixed with respect to the rotation of said rotating axis and of the relative graduated ring.

Therefore, the use of the two means for measuring the angular position, consisting for example of the two encoder devices, one arranged in the gripper 9 and one in the rotator device 3, makes it possible to apply a relative comparison between the relative positions (the measuring means of the device rotator 3 measures the rotation angle controlled by NC, that of the clamp 9 measures the effective rotation angle of the workpiece/sheet) providing the possibility of identifying any slippage of the workpiece: therefore, if both measuring means, and in particular, the encoder devices do not report the same position, it is possible to understand what the error is and correct it with an opposite rotation of the workpiece equal to degrees and/or submultiples of degree of slippage, without re-centering.

For example, with particular reference to FIG. 5, where:
- L is the width of the workpiece measured in its nominal position Pnp: in the calculation example carried out below, L = 2500 mm;
- C is the center of rotation of the workpiece, corresponding to the center of rotation of the rotating element 11 of the rotator device 3 and of the gripper 7, between its nominal position Pnp and its real position Prp;
- α is the angle of rotation of the workpiece corresponding to the slip from its nominal position Pnp to its real position Prp: in the calculation example carried out below, α = 8.26 arcsec;
- Ldp is the bending line, reference for centering the workpiece;
- x is the linear error of rotation of the workpiece due to slippage, the angular accuracy of the system according to the present invention is equal to the minimum error of the angle measured by the encoder = ± 4.13 arcsec; that is, with minimum resolution of the workpiece angle = 4.13 x 2 = 8.26 arcsec = 0.002294 deg: therefore the linear error x = L is obtained • sinα = 2500 • sin (0.002294) = 0, 1 mm.

The system according to the present invention therefore allows achieving the intended purposes as it allows:
- accurately detecting and quantifying any slippage of the workpiece, for example of the sheet metal during the processing cycle by the paneling machine;
- automatically correcting the angular error of the workpiece during the cycle;
- automatically inserting a re-centering of the workpiece during the cycle;
- reducing material waste;
- reducing downtime;
- reducing the cycle and setup time.

## Claims

1. Paneling machine (1) comprising a workpiece rotation control system, said paneling machine (1) comprising at least one rotator device (3) and being served by at least one manipulator device (5) with gripper (7) on a rotating axis (9) designed to arrange in a predetermined position at least one workpiece of material to be processed on at least one rotating element (11) of said rotator device (3), said manipulator device (5) with gripper (7) comprising at least one first measuring means (13) of at least an angular position of said rotary axis (9) of said gripper (7),
**characterized in that** said rotator device (3) comprises at least one second measuring means of at least one angular position of said rotating element (11) of said rotator device (3), said system further comprising processing means designed for relatively comparing at least one value of at least one said angular position measured by said first measuring means (13) with at least one value of at least one angular position measured by said second measuring means, said processing means being designed to operatively cooperate with said rotating element (11) of said rotator device (3) and/or said rotary axis (9) of said gripper (7) and, in the event that said value of said angular position measured by said first measuring means differs from said value of said angular position measured by said second measuring means, said processing means being designed to drive said rotating element (11) of said rotator device (3) and/or said rotary axis (9) of said gripper (7) to effect a rotation of said workpiece equal to a value of an angular difference between said value of said angular position measured by said first measuring means and said value of said angular position measured by said second measuring means.

2. Paneling machine (1) according to claim 1, **characterized in that** said first measuring means (13) are composed of at least one first rotary encoder device.

3. Paneling machine (1) according to the preceding claim, **characterized in that** said first rotary encoder device is of the incremental optical type with high angular resolution.

4. Paneling machine (1) according to claim 2, **characterized in that** said first rotary encoder device is of a magnetic or inductive and/or absolute type.

5. Paneling machine (1) according to claims 2 to 4, **characterized in that** said first rotary encoder device comprises at least one respective graduated ring (15) integral with and coaxially arranged to said rotating axis (9) of said gripper (7) and a relative reading head (17) fixed with respect to said rotation of said rotary axis (9) and of said relative graduated ring (15).

6. Paneling machine (1) according to claim 1, **characterized in that** said second measuring means is composed of at least one second rotary encoder device.

7. Paneling machine (1) according to the preceding claim, **characterized in that** said second rotary encoder device is of the absolute optical type with high angular resolution.

8. Paneling machine (1) according to claim 6, **characterized in that** said second rotary encoder device is of a magnetic or inductive type.

9. Paneling machine (1) according to the preceding claim, **characterized in that** said second rotary encoder device comprises at least one relative graduated ring integral with and coaxially arranged to a rotating axis of said rotating element (11) of said rotating device (3) or a rigidly connected rotating axis to this by means of a transmission and a relative reading head fixed with respect to a rotation of said rotary axis and of said relative graduated ring.

## Patentansprüche

1. Plattenbiegemaschine (1) mit einem Werkstückrotations-Steuersystem, wobei die Plattenbiegemaschine mindestens eine Drehvorrichtung (3) aufweist und von mindestens einer Handhabungsvorrichtung (5) mit Greifer (7) auf einer Drehachse (9) bedient wird, die dazu bestimmt ist, mindestens ein zu bearbeitendes Materialstück in einer voreingestellten Position auf mindestens einem Drehelement (11) der Drehvorrichtung (3) zu platzieren, wobei die Handhabungsvorrichtung (5) mit Greifer (7) mindestens ein erstes Messmittel (13) für mindestens eine Winkelposition der Drehachse (9) des Greifers (7) aufweist,
**dadurch gekennzeichnet, dass** die Drehvorrichtung (3) mindestens ein zweites Mittel zum Messen mindestens einer Winkelposition des Drehelements (11) der Drehvorrichtung (3) umfasst, wobei das System ferner ein Verarbeitungsmittel umfasst, das zum relativen Vergleichen mindestens eines Werts mindestens einer der von dem ersten Messmittel (13) gemessenen Winkelpositionen mit mindestens einem Wert mindestens einer der von dem zweiten Messmittel gemessenen Winkelpositionen vorgesehen ist, wobei das Verarbeitungsmittel dazu ausgelegt ist, betriebsmäßig mit dem Drehelement (11) der Drehvorrichtung (3) und/oder der Drehachse (9) der Klemme (7) zusammenzuwirken, und für den Fall, dass der von dem ersten Messmittel gemessene Wert der Winkelposition von dem von dem zweiten Messmittel gemessenen Wert der Winkelposition abweicht, das Verarbeitungsmittel dazu ausgelegt ist, das Drehelement (11) der Drehvorrichtung (3) und/oder die Drehachse (9) der Klemme (7) so zu steuern, dass eine Drehung des Werkstücks bewirkt wird, die einem Wert einer Winkeldifferenz zwischen dem von dem ersten Messmittel gemessenen Wert der Winkelposition und dem von dem zweiten Messmittel gemessenen Wert der Winkelposition entspricht.

2. Plattenbiegemaschine (1) nach Anspruch 1, **dadurch gekennzeichnet , dass** die erste Messeinrichtung (13) aus mindestens einer ersten Drehgebervorrichtung besteht.

3. Plattenbiegemaschine (1) nach dem vorhergehenden Anspruch, **dadurch gekennzeichnet, dass** die erste Drehgebervorrichtung (13) vom inkrementellen optischen Typ mit hoher Winkelauflösung ist.

4. Plattenbiegemaschine (1) nach Anspruch 2, **dadurch gekennzeichnet , dass** die erste Drehgebervorrichtung (13) vom magnetischen oder induktiven Typ und/oder vom absoluten Typ ist.

5. Plattenbiegevorrichtung (1) nach den Ansprüchen 2 bis 4, **dadurch gekennzeichnet, dass** die erste Drehgebervorrichtung (13) mindestens einen entsprechenden Teilring (15) umfasst, der integral und koaxial mit der Drehachse (9) des Greifers (7) angeordnet ist, sowie einen entsprechenden Lesekopf (17), der in Bezug auf die Drehung der Drehachse (9) und des entsprechenden Teilrings (15) fixiert ist .

6. Plattenbiegemaschine (1) nach Anspruch 1, **dadurch gekennzeichnet , dass** die zweite Messeinrichtung aus mindestens einer zweiten Drehgebervorrichtung besteht.

7. Plattenbiegegerät (1) nach dem vorhergehenden Anspruch, **dadurch gekennzeichnet, dass** die zweite Drehgebervorrichtung vom absoluten optischen Typ mit hoher Winkelauflösung ist.

8. Plattenbiegegerät (1) nach Anspruch 6, **dadurch gekennzeichnet , dass** die zweite Drehgebervorrichtung vom magnetischen oder induktiven Typ ist.

9. Plattenbiegemaschine (1) nach dem vorhergehenden Anspruch, **dadurch gekennzeichnet , dass** die zweite Drehgebervorrichtung mindestens einen entsprechenden Teilring umfasst, der integral und koaxial mit einer Drehachse des Drehelements (11) der Drehvorrichtung (3) angeordnet ist, oder eine Drehachse, die mittels eines Getriebes starr mit dieser verbunden ist, und einen entsprechenden Lesekopf, der in Bezug auf eine Drehung der Drehachse und des entsprechenden Teilrings fixiert ist.

## Revendications

1. Machine de pliage de panneaux (1) comprenant un système de contrôle de la rotation des pièces, ladite machine comprenant au moins un dispositif rotatif (3) et étant desservie par au moins un dispositif manipulateur (5) à pince (7) sur un axe de rotation (9) conçu pour placer au moins une pièce à usiner dans une position prédéfinie sur au moins un élément rotatif (11) dudit dispositif rotatif (3), ledit dispositif manipulateur (5) à pince (7) comprenant au moins un premier moyen de mesure (13) d'au moins une position angulaire dudit axe de rotation (9) de ladite pince (7),
**caractérisé en ce que** ledit dispositif rotatif (3) comprend au moins un second moyen de mesure d'au moins une position angulaire dudit élément rotatif (11) dudit dispositif rotatif (3), ledit système comprenant en outre des moyens de traitement prévus pour comparer relativement au moins une valeur d'au moins une dite position angulaire mesurée par ledit premier moyen de mesure (13) avec au moins une valeur d'au moins une dite position angulaire mesurée par ledit second moyen de mesure, lesdits moyens de traitement étant conçus pour coopérer fonctionnellement avec ledit élément rotatif (11) dudit dispositif rotatif (3) et/ou ledit axe de rotation (9) de ladite pince (7) et, dans le cas où ladite valeur de ladite position angulaire mesurée par ledit premier moyen de mesure diffère de ladite valeur de ladite position angulaire mesurée par ledit second moyen de mesure, lesdits moyens de traitement étant conçus pour commander ledit élément rotatif (11) dudit dispositif rotatif (3) et/ou ledit axe de rotation (9) de ladite pince (7) pour effectuer une rotation de ladite pièce égale à une valeur d'une différence angulaire entre ladite valeur de ladite position angulaire mesurée par ledit premier moyen de mesure et ladite valeur de ladite position angulaire mesurée par ledit second moyen de mesure.

2. Machine de pliage de panneaux (1) selon la revendication 1, **caractérisée en ce que** ledit premier moyen de mesure (13) est composé d'au moins un premier dispositif codeur rotatif.

3. Machine de pliage de panneaux (1) selon la revendication précédente, **caractérisée en ce que** ledit premier dispositif codeur rotatif (13) est de type optique incrémental à haute résolution angulaire.

4. Machine de pliage de panneaux (1) selon la revendication 2, **caractérisée en ce que** ledit premier dispositif codeur rotatif (13) est de type magnétique ou inductif et/ou de type absolu.

5. Machine de pliage de panneaux (1) selon les revendications 2 à 4, **caractérisée en ce que** ledit premier dispositif codeur rotatif (13) comprend au moins une bague graduée respective (15) solidaire et disposée coaxialement avec ledit axe de rotation (9) de ladite pince (7) et une tête de lecture relative (17) fixe par rapport à ladite rotation dudit axe de rotation (9) et de ladite bague graduée relative (15).

6. Machine de pliage de panneaux (1) selon la revendication 1, **caractérisée en ce que** ledit deuxième moyen de mesure est composé d'au moins un deuxième dispositif codeur rotatif.

7. Machine de pliage de panneaux (1) selon la revendication précédente, **caractérisée en ce que** ledit deuxième dispositif codeur rotatif est de type optique absolu à haute résolution angulaire.

8. Machine de pliage de panneaux (1) selon la revendication 6, **caractérisée en ce que** ledit deuxième dispositif codeur rotatif est de type magnétique ou inductif.

9. Machine de pliage de panneaux (1) selon la revendication précédente, **caractérisée en ce que** ledit second dispositif codeur rotatif comprend au moins une bague graduée relative solidaire et disposée coaxialement à un axe de rotation dudit élément rotatif (11) dudit dispositif rotatif (3) ou un axe de rotation relié rigidement à ce dernier au moyen d'une transmission et une tête de lecture relative fixe par rapport à une rotation dudit axe de rotation et de ladite bague graduée relative.
